# EUROPEAN PATENT APPLICATION

(11) **EP 4 597 018 A1**
(43) Date of publication of application: **06.08.2025**
(21) Application number: 24207241.1
(22) Date of filing: 17.10.2024
(51) Int. Cl.: F28F 1/02, F28D 1/053, F28F 9/02, F28D 21/00

(54) **COOLING PLATE ASSEMBLY, BATTERY MODULE, COOLING PLATE ASSEMBLY METHOD AND BATTERY PACK**

(30) Priority: 02.02.2024 CN 202420271143 U; 03.07.2024 WO PCT/CN2024/103332
(71) Applicant: Eve Energy Co., Ltd., Huizhou, Guangdong 516006 (CN)
(72) Inventor: TANG, Jing, Huizhou, Guangdong, 516006 (CN); ZHAO, Yuhang, Huizhou, Guangdong, 516006 (CN); ZHOU, Xiao, Huizhou, Guangdong, 516006 (CN); HUANG, Liansheng, Huizhou, Guangdong, 516006 (CN)
(74) Representative: Murgitroyd & Company

(57) **Abstract**

A cooling plate assembly, an assembly method applied to the cooling plate assembly, a battery module and a battery pack are provided. The cooling plate assembly includes a cooling plate configured to control a temperature of the battery module; and at least one current collector connected to an end portion of the cooling plate through bonding. The cooling plate assembly is conducive to improving the connection stability between the cooling plate and the current collector and the assembly efficiency.

## Description

### BACKGROUND OF DISCLOSURE

### 1. Field of the Disclosure

The present disclosure relates to the field of battery technology, and specifically to a cooling plate assembly, a battery module, an assembly method of the cooling plate assembly, and a battery pack.

### 2. Description of the Related Art

The battery types used in new energy vehicles mainly include a cylindrical battery, a square battery and a soft pack battery. Compared with the other two batteries, the 4690 large cylindrical battery has higher energy density, better safety and stability, and lower cost. With more recognition and attention from consumers, the 4690 large cylindrical battery is expected to become the future development trend of batteries for the new energy vehicles.

Among the related technologies, a large cylindrical battery pack has a disadvantage of generating more heat. The double-sided liquid cooled serpentine cooling plate assembly solution has excellent heat dissipation, thus becoming the first choice for the cylindrical battery pack. The weight-saving design of the cylindrical battery pack is currently becoming the key issue that it is used for the new energy vehicles. The number of the serpentine tubes in the double-sided liquid cooled serpentine cooling plate assembly is doubled compared to the number of the serpentine tubes in the single-sided serpentine cooling plate assembly. Therefore, the weight reduction design of the double-sided liquid cooled serpentine cooling plate assembly becomes the key to the application of the double-sided liquid cooled serpentine cooling plate assembly in the cylindrical battery pack.

### SUMMARY

In the related technology, the serpentine cooling plate assembly includes a serpentine cooling plate and a current collector connected to both ends of the serpentine cooling plate. The serpentine cooling plate is preferably made of 3 series aluminum material. The serpentine cooling plate is connected to the current collector made of 3 series aluminum material by a welding manner. Such connection manner has a low assembly efficiency and a relatively poor reliability.

In a first aspect, embodiments of the present disclosure provide a cooling plate assembly, the cooling plate assembly comprising:
a cooling plate, configured to control a temperature of a battery module;
at least one current collector, connected to an end portion of the cooling plate by bonding.

In a second aspect, embodiments of the present disclosure provide an assembly method applied to the above-mentioned cooling plate assembly. The assembly method includes:
applying a first adhesive and a second adhesive, respectively, on a first bonding portion and a second bonding portion of a first sub-casing of the current collector;
applying the first adhesive and the second adhesive, respectively, on the first bonding portion and the second bonding portion of a second sub-casing of the current collector;
applying a third adhesive on a first outer surface of the first sub-casing;
applying the third adhesive on a second outer surface of the second sub-casing;
bonding the first outer surface of the first sub-casing to the cooling plate; and
bonding the second outer surface of the second sub-casing to the cooling plate.

In a third aspect, embodiments of the present disclosure provide a battery module. The battery module includes a plurality of the above-mentioned cooling plate assemblies and a plurality of battery sets. Each of the cooling plate assemblies is disposed between the adjacent battery sets.

In a fourth aspect, embodiments of the present disclosure provide a battery pack. The battery pack includes a box and a plurality of battery modules disposed in an interior of the box. The battery module includes the above-mentioned battery module.

The cooling assembly provided by present disclosure can improve an assembly efficiency of the current collector with the cooling plate, and enhance a connection stability between the current collector and the cooling plate by bonding the current collector to the cooling plate.

The assembly method provided by present disclosure and applied to the above-mentioned cooling assembly can improve the assembly efficiency of the current collector and the cooling plate by bonding the first sub-casing and the second sub-casing of the current collector to the cooling plate, respectively.

The battery module provided by present disclosure is designed based on the above-mentioned cooling assembly. The beneficial effects of the above-mentioned cooling assembly may be applicable to the beneficial effects of the battery module, which will not be described in detail here.

The battery pack provided by present disclosure is designed based on the above-mentioned battery module. The beneficial effects of the above-mentioned battery module may be applicable to the beneficial effects of the battery pack, which will not be described in detail here.

### BRIEF DESCRIPTION OF DRAWINGS

In order to more clearly illustrate the embodiments of the present disclosure or related art, the following figures will be described in the embodiments are briefly introduced. It is obvious that the drawings are merely some embodiments of the present disclosure, a person having ordinary skill in this field can obtain other figures according to these figures without paying the premise.
FIG. 1 is a three-dimensional schematic view illustrating a cooling plate assembly provided by embodiments of the present disclosure;
FIG. 2 is an exploded view of a cooling plate assembly provided by embodiments of the present disclosure;
FIG. 3 is a partial enlarged view of Figure 2;
FIG. 4 is a schematic sectional structural diagram showing the bonding between the current collector and the connection portion of the cooling plate provided by embodiments of the present disclosure;
FIG. 5 is a schematic sectional structural diagram of the current collector provided by embodiments of the present disclosure;
FIG. 6 is another schematic sectional structural diagram of the current collector provided by embodiments of the present disclosure;
FIG. 7 is a schematic diagram of the exploded structure of the current collector provided by embodiments of the present disclosure;
FIG. 8 is a perspective view of a first current collector provided by embodiments of the present disclosure;
FIG. 9 is a perspective view of a second current collector provided by embodiments of the present disclosure;
FIG. 10 is a schematic structural diagram of coating the different adhesives on the surface of the sub-casings of the current collector according to the embodiments of the present disclosure.

### Reference symbols:

100. Cooling plate assembly;
10. Cooling plate; 11. Connection portion; 111. The first connection portion; 112. The second connection portion; 12. Flow channel; 13. Base portion; 14. The first flange;
20. Current collector; 21. The first current collector; 211. The first casing; 212. The first closed end; 213. The first open end; 22. The second current collector; 221. The second casing; 222. The second closed end; 223. The second open end; 23. Receiving cavity; 24. Bonding portion; 241. The first bonding portion; 242. The second bonding portion; 243. Strengthening structure; 2431. The first groove; 2432. The second groove; 251. The first sub-casing; 2511. The first outer surface; 252. The second sub-casing; 2521. The second outer surface; 261. Inlet port; 262. Outlet port; 27. Partition wall; 28. Main body portion; 29. The second flange;
31. The first adhesive; 32. The second adhesive; 33. The third adhesive.

### DETAILED DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

Some embodiments of the present disclosure provide a battery module, comprising a plurality of battery cells arranged in a matrix. The plurality of the battery cells are arranged side by side along a first direction to form a battery set. The plurality of battery sets are spaced apart along a second direction to form the battery module. The first direction and the second direction are arranged vertically.

The battery cell in the battery module is configured as a cylindrical battery. The cylindrical battery may be a 4690 large cylindrical battery, a 4680 large cylindrical battery, a 46135 large cylindrical battery, or a 42300 large cylindrical battery in the related technologies. A plurality of cylindrical batteries are connected in series, in parallel or in hybrid through a connecting sheet so that the battery module has a suitable capacity.

Embodiments of the present disclosure also provide a battery pack. The battery pack includes a box and at least one battery module disposed in the interior of the box. The battery pack can be used in new energy vehicles.

The battery module further includes a cooling device. The cooling device include a plurality of cooling plate assemblies, a liquid inlet pipe and a liquid outlet pipe. The cooling plate assembly 100 applied to the large cylindrical battery preferably adopts a double-sided serpentine cooling plate assembly 100. The cooling plate assembly 100 include a cooling plate 10 and at least one current collector 20 connected to an end portion of the cooling plate 10. The cooling plate 10 is arranged between two adjacent battery sets. The cooling plate 10 is configured as a serpentine corrugated structure matching with the cylindrical side surface of the cylindrical battery. That is, the curvature of the outer surface of the cooling plate 10 is consistent with the curvature of the cylindrical side surface of the cylindrical battery, so that one side of the cooling plate 10 abuts against the outer side surface of one battery set, and the other side of the plate 10 abuts against the outer side of another adjacent battery set.

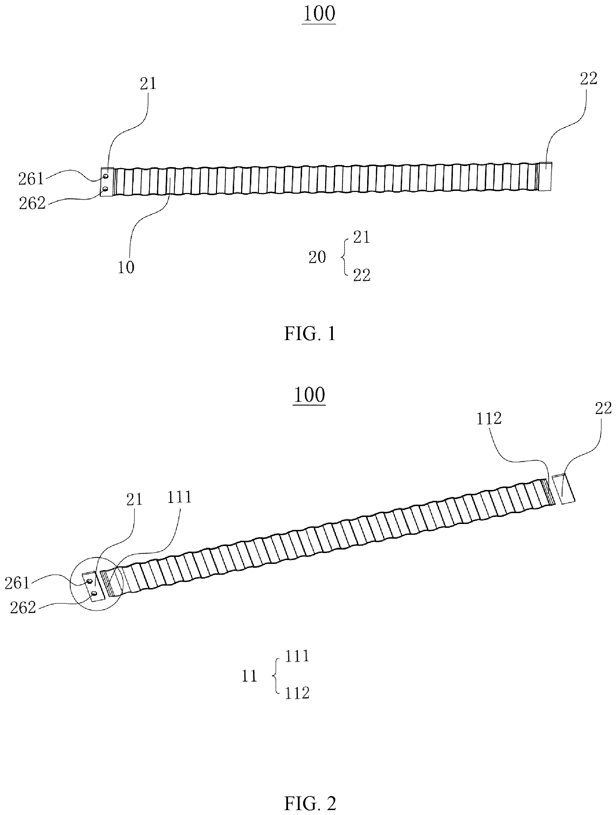

As shown in FIGS. 1 to 3, the cooling plate assembly 100 includes a cooling plate 10, and a first current collector 21 and a second current collector 22 respectively connected to two ends of the cooling plate 10.

In the related technologies, the large cylindrical battery pack suffers from the problem of generating too much heat. The solution of the double-sided liquid cooled serpentine cooling plate assembly 100 has excellent heat dissipation, making it the first choice for the cylindrical battery pack. The weight-saving design of the cylindrical battery pack is currently becoming the key point that the cylindrical battery pack is used in the new energy vehicles. The number of serpentine tubes in the double-sided liquid cooled serpentine cooling plate assembly 100 is doubled compared to the number of the serpentine tubes in the single-sided serpentine cooling plate assembly 100. Therefore, the weight reduction design of the double-sided liquid cooled serpentine cooling plate assembly 100 becomes a key issue for the application of the double-sided liquid cooled serpentine cooling plate assembly 100 in the cylindrical battery pack. The serpentine cooling plate assembly 100 includes the serpentine cooling plate 10 and the current collectors 20 connected to both ends of the serpentine cooling plate 10. The serpentine cooling plate 10 is preferably made of 3 series aluminum material. The 3 series aluminum material has good thermal conductivity, so the cooling plate 10 in the serpentine cooling plate assembly 100 is made of 3 series aluminum. The 3 series aluminum material cannot be replaced, so that it is only possible to design the current collector 20 connected to both ends of the serpentine cooling plate 10 by reducing the weight thereof.

The inventor found through research that the weight of the current collector 20 can be significantly reduced when the current collector 20 is made of a plastic material, compared to the case in which the current collector 20 is made of the 3-series aluminum material. In one example, the weight of a single cooling plate assembly 100 in the current collector 20 made of the 3-series aluminum material is 0.377kg. The weight of a single cooling plate assembly 100 in the current collector 20 made of the plastic material is 0.32kg. The weight of the single serpentine cooling plate assembly 100 can be reduced by 15%, which is crucial to the weight-saving design of the cooling device inside the battery pack. Furthermore, the plastic current collector 20 may be set to different shapes and volumes by adjusting the mold for the plastic molding, so that a matching design can be carried out according to the different shapes of the space inside the battery pack, which is beneficial to miniaturized design of the battery pack.

The plastic material suitable for preparing the above-mentioned current collector includes PA (polyamide) materials. The PA materials have corrosion resistance, high temperature resistance, and high strength.

When the current collector 20 and the cooling plate 10 are both made of aluminum material, the current collector 20 and the cooling plate 10 are connected by a welding manner. When the current collector 20 is made of the plastic material, if the current collector 20 and the cooling plate are connected by the welding manner, it will lead to a poor connection reliability between the current collector 20 and the cooling plate 10 and a low assembly efficiency. Therefore, the connection manner between the plastic current collector 20 and the cooling plate 10 becomes a key point to improve the design of the double sided serpentine cooling plate assembly 100.

In the embodiments of the present disclosure, the plastic current collector 20 and the cooling plate 10 are connected by a bonding manner, thereby improving the connection stability the between the current collector 20 and the cooling plate 10, and the assembly efficiency between the two components.

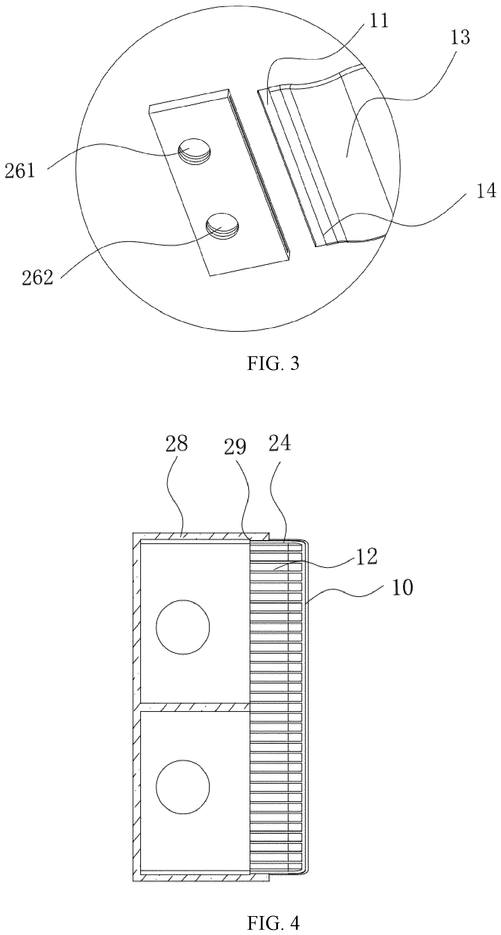

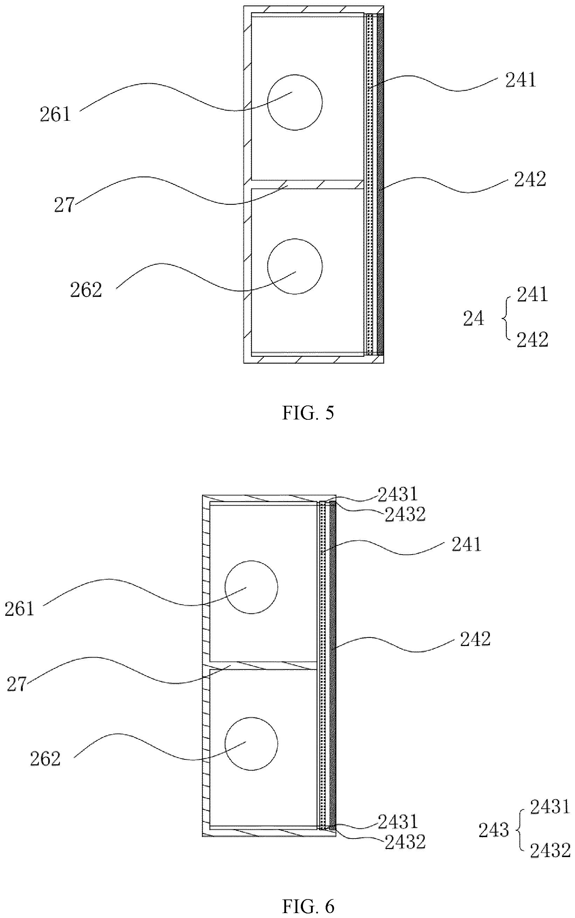

With further reference to FIGS. 2 to 6, FIG. 2 is an exploded view after two current collectors 20 connected to the cooling plate 10 are separated from the cooling plate 10, and FIG. 3 is a partial enlargement of FIG. 2; FIG. 4 shows a sectional view after the connection portion 11 of the cooling plate 10 is bonded to the current collector 20. FIGS. 5 and 6 are schematic diagrams of two sectional structures of the current collector 20.

The current collector 20 includes an open receiving cavity 23. The current collector 20 further includes at least one bonding portion 24 disposed inside the receiving cavity 23. The bonding portion 24 is disposed close to the open end of the receiving cavity 23. The cooling plate 10 includes a connection portion 11 that enters the interior of the receiving cavity 23 through the opening of the receiving cavity 23 and is bonded to the bonding portion 24 through at least one adhesive.

During the assembly process, the adhesive is applied to the bonding portion 24 of the current collector 20, and the cooling plate 10 is introduced to the interior of the receiving cavity 23 through the opening of the receiving cavity 23. The connection portion 11 of the cooling plate 10 is bonded to the bonding portion 24 of the current collector 20 via the adhesive, making assembly easy.

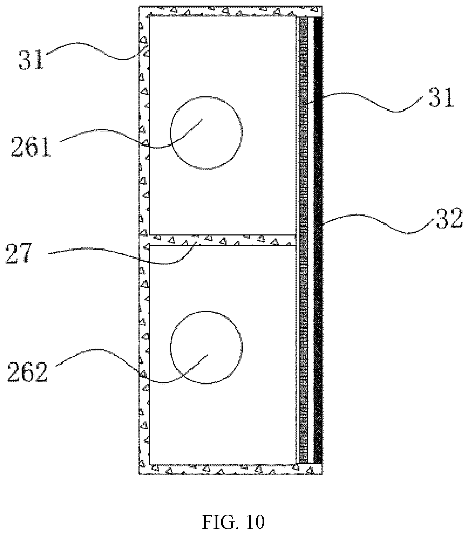

In some embodiments provided in the present disclosure, as shown in FIG. 5 and FIG. 10, at least one bonding portion 24 includes a first bonding portion 241 and a second bonding portion 242. The second bonding portion 242 is closer to the open end of the receiving cavity 23 compared to the first bonding portion 241. At least one of the adhesives includes a first adhesive 31 and a second adhesive 32 with different viscosities. The first bonding portion 241 is bonded to the first part of the connection portion 11 through the first adhesive 31, and the second bonding portion 242 is bonded to the second part of the connection portion 11 through the second adhesive 32. The viscosity of the first adhesive 31 is smaller than the viscosity of the second adhesive 32.

The first adhesive 31 having lower viscosity is used to ensure the sealing of the connection between the cooling plate 10 and the current collector 20 and prevent leakage of the fluid at the connection between the current collector 20 and the cooling plate 10. The second adhesive 32 with the higher viscosity is used to ensure the bonding strength between the cooling plate 10 and the current collector 20 and to prevent loosening of the cooling plate 10 from the current collector 20 during collision and shaking of the battery pack.

For example, the first adhesive 31 adopts a UV glue (shadowless glue) with a medium to high viscosity, a good surface drying effect, a good bonding effect on the plastics, a high temperature resistance, and a good anti-aging effect. The suitable UV glue includes 8651 glue. The second adhesive 32 adopts a PU (polyurethane) glue with a high strength bonding performance, a good flame retardant performance, and a rapid curing at room temperature. The suitable PU glue includes 6306 glue.

In order to further enhance the connection stability between the cooling plate 10 and the current collector 20, a reinforcing structure 243 is provided on the inner surface of the bonding portion 24 of the current collector 20 or the outer surface of the connection portion 11 of the cooling plate 10. The reinforcing structure 243 may be a groove or a protrusion, thereby increasing the bonding area between the current collector 20 and the cooling plate 10. The groove is provided on the inner surface of the bonding portion 24 of the current collector 20, and correspondingly, the protrusion is provided on the outer surface of the connection portion of the cooling plate. The protrusion can be embedded in the groove. Alternatively, the protrusion is provided on the inner surface of the bonding portion 24 of the current collector 20 and accordingly the groove is provided on the outer surface of the connection portion 11 of the cooling plate 10. The protrusion can be embedded in the groove, thereby enhancing the connection strength between the current collector 20 and the cooling plate 10.

As shown in FIG. 6, the reinforcing structure 243 includes a first groove 2431 and a second groove 2432 spaced apart on the bonding portion 24 of the current collector 20. The first groove 2431 may be configured to accommodate the first adhesive agent 31, and the second groove 2432 may be configured to accommodate the second adhesive 32.

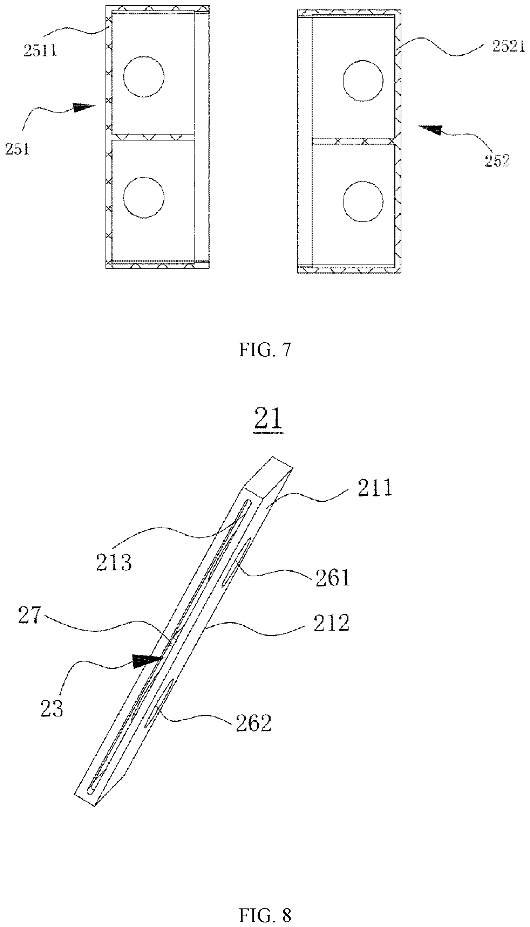

Referring further to FIG. 7, in some embodiments, the current collector 20 includes a first sub-casing 251 and a second sub-casing 252 connected with each other. The first sub-casing 251 and the second sub-casing 252 are bonded through a third adhesive 33. A part of the bonding portion 24 is provided on the first sub-casing 251, and the other part of the bonding portion 24 is provided on the second sub-casing 252. The third adhesive 33 may adopt the same type of adhesive material with the same property as the second adhesive 32.

The first sub-casing 251 and the second sub-casing 252 may be detached along the thickness direction of the current collector 20. The first sub-casing 251 and the second sub-casing 252 are arranged basically symmetrically. A part of the above described first bonding portion 241 is provided on the first sub-casing 251, and the other part of the first bonding portion 241 is provided on the second sub-casing 252. A part of the above described second bonding portion 242 is provided on the first sub-casing 251 and the other part of the second bonding portion 242 is provided on the second sub-casing 252.

By splitting the current collector 20 separately, it is beneficial to assemble the current collector 20 and the cooling plate 10. In the embodiments of the present disclosure, an assembly method for the above-mentioned cooling plate assembly 100 is also provided. The assembly method includes:
applying the first adhesive 31 and the second adhesive 32 respectively on the first bonding portion 241 and the second bonding portion 242 of the first sub-casing 251 of the current collector 20;
applying the first adhesive 31 and the second adhesive 32 respectively on the first bonding portion 241 and the second bonding portion 242 of the second sub-casing 252 of the current collector 20;
applying the third adhesive 33 on the first outer surface 2511 of the first sub-casing 251;
applying the third adhesive 33 on the second outer surface 2521 of the second sub-casing 252;
bonding the first sub-casing 251 to a part of the connection portion 11 of the cooling plate 10;
bonding the second outer surface 2521 of the second sub-casing 252 to the first outer surface 2511 of the first sub-casing 251, and bonding the second sub-casing 252 to the other part of the connection portion 11 of the cooling plate 10.

Compared with the current collector 20 having an integrated structure, the current collector 20 with a split structure is easier to assemble with the connection portion 11 of the cooling plate 10, thereby improving the assembly efficiency.

Referring further to FIGS. 2 and 3, the cooling plate 10 includes a base portion 13. The connection portion 11 is located at an end of the base portion 13. A first flange 14 is formed between the base portion 13 and the connection portion 11. The first flange 14 abuts the side wall of the current collector 20.

The structure of the above-mentioned first flange 14 is configured for operation and positioning. At the same time, the abutting effect between the first flange 14 and the third outer surface of the current collector 20 can be used to further enhance the connection stability between the current collector 20 and the cooling plate 10. In preferred embodiments, an adhesive can be further coated on the third outer surface of the current collector 20 to bond the third outer surface to the first flange 14.

Referring further to FIG. 4, the current collector 20 further includes a main body portion 28. The bonding portion 24 is disposed at an end of the main body portion 28. A second flange 29 is formed between the inner wall of the bonding portion 24 and the inner wall of the main body portion 28.

By providing the second flange 29, it is easy to position the bonding portion 24, thereby facilitating the application of adhesive on the bonding portion 24 and improving assembly efficiency.

As shown in FIGS. 1 to 4, at least one current collector 20 includes a first current collector 21 and a second current collector 22. The first current collector 21 is bonded to an end of the cooling plate 10. The second current collector 22 is bonded to the other end of the cooling plate 10. The first current collector 21 include an inlet port 261 and an outlet port 262. The inlet port 261 is configured to connect a liquid inlet pipe, and the outlet 262 is configured to connect a liquid outlet pipe.

A plurality of S-shaped extending flow channels 12 are provided in the inner cavity of the cooling plate 10. A partition wall is disposed between the adjacent flow channels 12. The inlet port and outlet port 262 of the flow channels 12 are both provided at the first end of the cooling plate 10. The cooling liquid flowing out from the liquid inlet pipe enters the flow channel 12 through the inlet port and flows to the second end of the cooling plate 10. The circulating liquid flows back from the second end of the cooling plate 10 to the first end and enters the liquid outlet pipe at the outlet port 262. By providing the above-mentioned S-shaped flow channels 12, it is beneficial to enhance the temperature uniformity of the cooling plate 10.

As shown in FIG. 8, the first current collector 21 includes a first casing 211. The first casing 211 has first closed ends 212 and a first open end 213 disposed in opposite. The first casing 211 is also provided with a partition wall 27 inside. The partition wall 27 is provided between the inlet port 261 and the outlet port 262. The partition wall 27 extends from the first closed end 212 to the first open end 213 and terminates at the side of the bonding portion 24. The partition wall 27 is provided to separate the cooling liquid flowing out of the liquid inlet pipe from the reflux liquid flowing into the liquid outlet pipe.

The bonding portion 24 is provided in the inner cavity of the first casing 211, and the bonding portion 24 is configured to bond with the first connection portion 111 of the cooling plate 10.

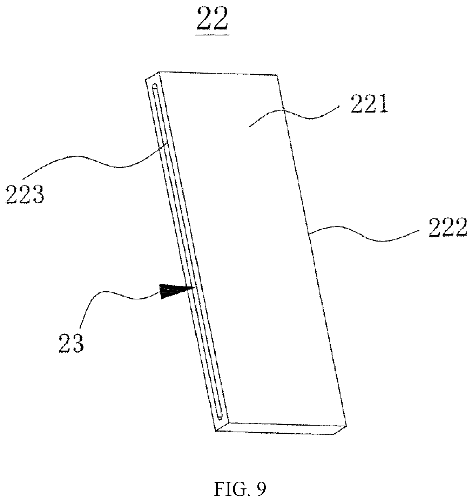

As shown in FIG. 9, the second current collector 22 includes a second casing 221. The second casing 221 has a second closed end 212 and a second open end 223 disposed in opposite. A bonding portion 24 is disposed in the inner cavity of the cooling plate 10. The bonding portion 24 is configured to bond with the second connection portion 112 of the cooling plate 10.

While the present disclosure has been described in connection with what is considered the most practical and preferred embodiments, it is understood that the present disclosure is not limited to the disclosed embodiments but is intended to cover various arrangements made without departing from the scope of the broadest interpretation of the appended claims.

## Claims

1. A cooling plate assembly (100), **characterized by** comprising:
a cooling plate (10), wherein the cooling plate (10) is configured to control a temperature of a battery module; and
at least one current collector (20), wherein the current collector (20) is connected to an end portion of the cooling plate (10) by bonding.

2. The cooling plate assembly (100) according to claim 1, **characterized in that** the current collector (20) comprises an open receiving cavity (23), and the current collector (20) further comprises at least one bonding portion (24) disposed inside the receiving cavity (23), wherein the bonding portion (24) is disposed close to open ends (213, 223) of the receiving cavity (23); the cooling plate (10) comprises a connection portion (11), and the connection portion (11) and the bonding portion (24) are bonded through at least one adhesive.

3. The cooling plate assembly (100) according to claim 1, **characterized in that** the current collector (20) is made of a plastic material.

4. The cooling plate assembly (100) according to claim 2, wherein the bonding portion (24) comprises a first bonding portion (241) and a second bonding portion (242), the second bonding portions (242) is disposed closer to the open ends (213, 223) of the receiving cavity (23) compared to the first bonding portion (241), and the adhesive comprises a first adhesive (31) and a second adhesive (32) with different viscosities, the connection portion (11) comprises a first part and a second part, the first bonding portion (241) is bonded to the first part of the connection portion (11) through the first adhesive (31) ), the second bonding portion (242) is bonded to the second part of the connection portion (11) through the second adhesive (32), wherein the viscosity of the first adhesive (31) is smaller than the viscosity of the second adhesive (32).

5. The cooling plate assembly (100) according to claim 4, **characterized in that** the first adhesive (31) comprises a UV glue, and/or the second adhesive (32) comprises a PU glue.

6. The cooling plate assembly (100) according to claim 2, **characterized in that** a reinforcing structure (243) is disposed on the bonding portion (24) or the connection portion (11), and the reinforcing structure (243) 243) comprises a groove or a protrusion configured to increase a bonding area between the bonding portion (24) and the connection portion (11).

7. The cooling plate assembly (100) according to claim 6, wherein the reinforcing structure (243) comprises a first groove (2431) and a second groove spaced apart on the bonding portion (24), the first groove (2431) is configured to accommodate the first adhesive (31), and the second groove (2432) is configured to accommodate the second adhesive (32).

8. The cooling plate assembly (100) according to claim 2, **characterized in that** the current collector (20) comprises a first sub-casing (251) and a second sub-casing (252) connected to each other, the first sub-casing (251) and the second sub-casing (252) are bonded through a third adhesive (33), and a part of the bonding portion (24) is disposed on the first sub-casing and the other part of the bonding portion (24) is disposed on the second sub-casing (252).

9. The cooling plate assembly (100) according to any one of claims 2 to 8, **characterized in that** the cooling plate (10) comprises a base portion (13), and the connection portion (11) is disposed on an end of the base portion (13), a first flange (14) is formed between the base portion (13) and the connection portion (11), and the first flange (14) abuts a side wall of the current collector (20).

10. The cooling plate assembly (100) according to any one of claims 2 to 9, **characterized in that** the current collector (20) further comprises a main body portion (28), and the bonding portion (24) is disposed at an end of the main body portion (28), and a second flange (29) is formed between an inner wall of the bonding portion (24) and an inner wall of the main body portion (28).

11. The cooling plate assembly (100) according to any one of claims 2-9, **characterized in that** the current collector (20) comprises a first current collector (21) and a second current collector (22), the first current collector (21) is bonded to an end of the cooling plate (10), and the second current collector (22) is bonded to the other end of the cooling plate (10);
the first current collector (21) is provided with an inlet port (261) and an outlet portion (262), the inlet port (261) is configured to connect a liquid inlet pipe, and the outlet port (262) is configured to connect a liquid outlet pipe.

12. The cooling plate assembly (100) according to claim 11, **characterized in that** the first current collector (21) comprises a first casing (211), the first casing (211) has a first closed end (212) and a first open end (213) disposed in opposite, the first casing are further provided with a partition wall (27) disposed between the inlet port (261) and the outlet port (262), the partition wall (27) extends from the first closed end (212) to the first open end (213) and terminates at a side of the bonding portion (24).

13. An assembly method applied to the cooling plate assembly of claim 1, **characterized in that** the assembly method comprises:
applying a first adhesive (31) and a second adhesive respectively on the first bonding portion (241) and the second bonding portion (242) of the first sub-casing (251) of the current collector (20);
applying the first adhesive (31) and the second adhesive part (242) respectively on the first bonding portion (241) and the second bonding portion (242) of the second sub-casing (252) of the current collector (20);
applying a third adhesive (33) on a first outer surface (2511) of the first sub-casing (251);
applying the third adhesive (33) on a second outer side (2521) of the second sub-casing (252);
bonding the first outer surface (2511) of the first sub-casing (251) to the cooling plate (10);
bonding the second outer surface (2521) of the second sub-casing (252) to the cooling plate (10).

14. A battery module, **characterized in that** the battery module comprises a plurality of cooling plate assemblies (100) according to any one of claims 1 to 12 and a plurality of battery sets, wherein each of the cooling plate assemblies (100) is disposed between the adjacent battery sets.

15. A battery pack, **characterized in that** the battery pack comprises a box and a plurality of battery modules arranged inside the box, wherein the battery modules comprise the battery module according to claim 14.
